# DEMANDE DE BREVET EUROPEEN

(11) **EP 1 179 552 A1**
(43) Date de publication de la demande: **13.02.2002**
(21) Numéro de dépôt: 01402069.7
(22) Date de dépôt: 31.07.2001
(51) Int. Cl.: C08F 20/34

(54) **Nouveaux (co)polymères hydrosolubles à groupes amino quaternaires, leur fabrication et leur utilisation**

(30) Priorité: 07.08.2000 FR 0010388
(71) Demandeur: Atofina, 92800 Puteaux (FR)
(72) Inventeur: Tembou N'Zudie, Denis, 27470 Serquigny (FR); Legrand, Yvon, 62800 Lievin (FR)
(74) Mandataire: Rieux, Michel

(57) **Abrégé**

Ce (co) polymère cationique hydrosoluble est obtenu à partir d'une composition de monomères comprenant, pour 100 parties en moles, de 0 à 95 parties d'au moins un monomère hydrosoluble (I) ; 0,20 à 100 parties d'au moins un monomère hydrosoluble cationique (II) ou (III); 0 à 60 parties d'au moins un monomère hydrosoluble potentiellement anionique par variation du pH ; 0 à 90 parties d'au moins un monomère hydrosoluble cationique ayant un seul groupe amino quaternaire, de formule (IV) ; 0 à 10 parties d'au moins un monomère hydrophobe ; et 0 à 30 parties d'au moins un monomère hydrosoluble autre que les monomères (A), (B), (C) et (D). 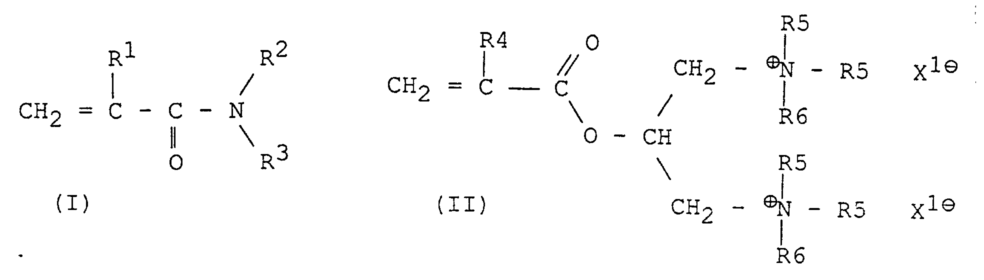 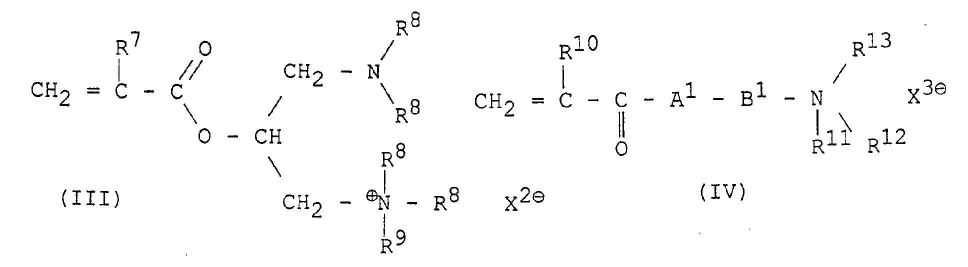 R¹, R⁴, R⁷, R¹⁰ = H ou -CH₃ ; R², R³ = H, alkyle en C₁-C₅ comportant éventuellement un ou plusieurs OH, ou (alcoxy en C₁-C₅)-alkyle en C₁-C₅ ; R⁵, R⁶, R⁸, R⁹ = H, alkyle en C₁-C₁₈, benzyle ou hydroxyéthyle ; X^{1⊖}, X^{2⊖} , X^{3⊖} = anion monovalent ; A¹ = -O- ou -NH- ; B¹ = CH₂-CH₂- , -CH₂-CH₂CH₂- ou -CH₂-CHOH-CH₂-; R¹¹, R¹² = -CH₃ ou alkyle en C₂-C₁₆ ; R¹³ = H, -CH₃ ou alkyle en C₂-C₁₆.

## Description

La présente invention porte sur de nouveaux (co)polymères à groupes amino quaternaires, se présentant notamment sous forme d'émulsions inverses, de poudres et de solutions aqueuses, sur des procédés permettant de préparer ces nouveaux (co)polymères, et sur l'utilisation de ces derniers pour la floculation, notamment dans le domaine des eaux résiduaires urbaines et industrielles, de l'industrie papetière, des mines et carrières, des boues de forage, de la récupération assistée du pétrole et de l'eau potable.

Pour répondre à ces applications, des polymères hydrosolubles cationiques ont déjà été proposés et commercialisés sous quatre types de présentation :
(1) sous forme d'émulsion inverse, c'est-à-dire de dispersion dans l'huile de particules de polymère hydrosoluble stabilisées par des tensio-actifs. La préparation de ces produits est obtenue selon un procédé en émulsion inverse décrit par exemple dans les brevets américains US-A-3 284 393 et US-A-5 292 800 ;
(2) sous forme de solution aqueuse obtenue par polymérisation en solution aqueuse homogène selon un procédé couramment appelé procédé gel, lequel conduit à un gel hydraté qui peut être facilement dilué dans l'eau et vendu sous forme de solution aqueuse diluée (par exemple brevet américain US-A-5 422 408) ;
(3) sous forme de dispersion aqueuse également appelée émulsion eau / eau, c'est-à-dire une dispersion aqueuse de particules de polymère hydrosoluble stabilisées par un copolymère dispersant de faible masse. Le procédé de synthèse est par exemple décrit dans la demande de brevet français FR-A-2 770 526 ;
(4) sous forme de poudre, par séchage du gel issu du procédé gel, par polymérisation en suspension inverse, par atomisation des émulsions inverses et des dispersions aqueuses (par exemple brevet américain US-A-5 696 228).

Ces polymères sont en général obtenus par copolymérisation de :
(a) 0 à 95% en moles d'au moins l'un parmi le (méth)acrylamide et les dérivés de (méth)acrylamide, comme les (méth)acrylamides N-substitués (par exemple le N-isopropylacrylamide, le N-éthoxypropylacrylamide), et les (méth)acrylamides N,N-substitués ;
(b) 5 à 100% en moles d'un ou plusieurs monomères cationiques ayant un groupe amino quaternaire de formule générale : 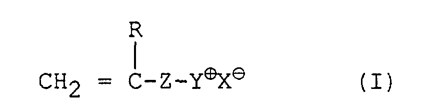 dans laquelle :
   - R représente H ou méthyle ;
   - Z représente un groupe divalent électro accepteur qui est susceptible d'activer la polymérisation radicalaire ;
   - Y^{⊕} représente un groupe monovalent cationique ; et
   - X^{⊖} représente un anion ; et
(c) 0 à 30% en moles d'un ou plusieurs monomères potentiellement anioniques, comme les acides carboxyliques à insaturation éthylénique, par exemple l'acide (méth)acrylique.

Les monomères à groupes amino tertiaires ou quaternaires utilisés pour la préparation des copolymères cationiques hydrosolubles décrits dans les documents précédents possèdent un seul groupe amino quaternaire par molécule. Contrairement à ces structures connues, la Société déposante a maintenant découvert que d'autres monomères ayant deux groupes amino quaternaires ou un groupe amino quaternaire associé à un groupe amino tertiaire peuvent être utilisés pour la préparation de nouveaux copolymères cationiques hydrosolubles, lesquels peuvent se présenter sous forme d'émulsions inverses, de poudres, ou de solutions aqueuses.

La présente invention a donc d'abord pour objet un (co)polymère cationique hydrosoluble, caractérisé par le fait qu'il est obtenu à partir d'une composition de monomères comprenant, pour 100 parties en moles :
(A) de 0 à 95 parties en moles d'au moins un monomère hydrosoluble de formule (I) : 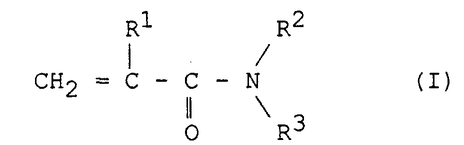 dans laquelle :
   - R¹ représente H ou -CH₃ ; et
   - R² et R³, identiques ou différents, représentent chacun indépendamment H, alkyle en C₁-C₅ qui comporte éventuellement un ou plusieurs groupes OH, ou (alcoxy en C₁-C₅)-alkyle en C₁-C₅ ;
(B) 0,20 à 100 parties en moles d'au moins un monomère hydrosoluble cationique choisi parmi ceux des formules (II) et (III) suivantes : 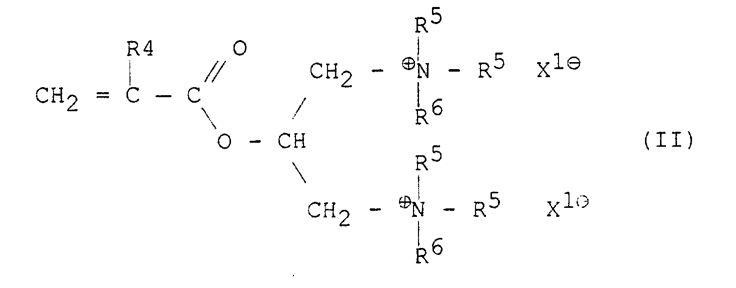 dans laquelle :
   - R⁴ représente H ou -CH₃ ;
   - R⁵ et R⁶, identiques ou différents, représentent chacun indépendamment H, alkyle en C₁-C₁₈, benzyle (-CH₂-C₆H₅) ou hydroxyéthyle ; et
   - X^{1⊖} représente un anion monovalent, tel que Cl^{θ}, Br^{⊖} ; 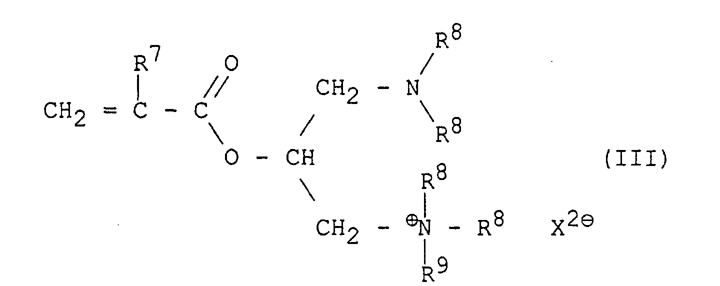
   dans laquelle :
   - R⁷ représente H ou un -CH₃ ;
   - R⁸ et R⁹, identiques ou différents, représentent chacun indépendamment hydrogène, alkyle en C₁-C₁₈, benzyle (-CH₂-C₆H₅) ou hydroxyéthyle ; et
   - X^{2⊖} représente un anion monovalent, tel que Cl^{⊖}, Br^{⊖} ;
(C) 0 à 60 parties en moles d'au moins un monomère hydrosoluble potentiellement anionique par variation du pH ;
(D) 0 à 90 parties en moles d'au moins un monomère hydrosoluble cationique ayant un seul groupe amino quaternaire, de formule (IV) : 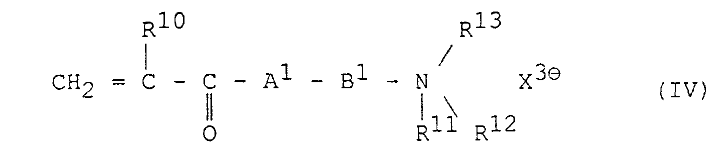 dans laquelle :
   - R¹⁰ représente H ou -CH₃ ;
   - A¹ représente -O- ou -NH- ;
   - B¹ représente CH₂-CH₂- , -CH₂-CH₂CH₂- ou -CH₂-CHOH-CH₂- ;
   - R¹¹ et R¹², identiques ou différents, représentent chacun indépendamment -CH₃ ou un groupe alkyle en C₂-C₁₆ ;
   - R¹³ représente hydrogène, -CH₃ ou un groupe alkyle en C₂-C₁₆ ; et
   - X^{3⊖} est un anion monovalent, tel que Cl^{⊖}, Br^{⊖} ;
(E) 0 à 10 parties en moles d'au moins un monomère hydrophobe ; et
(F) 0 à 30 parties en moles d'au moins un monomère hydrosoluble autre que les monomères (A), (B), (C) et (D).

Le ou les composés (A) de formule (I) sont choisis de préférence parmi l'acrylamide, le méthacrylamide, le N-isopropyl acrylamide, le N-éthoxypropyl acrylamide, le N,N-diméthylacrylamide, le N-(2-hydroxypropyl)acrylamide et le N-(2-hydroxypropyl)-méthacrylamide. L'acrylamide est particulièrement préféré.

Le ou les monomères (B) de formule (II) sont choisis notamment parmi ceux pour lesquels :
- R⁴ représente H ;
- R⁵ représente -CH₃ ;
- R⁶ représente -CH₃ ou benzyle ; et
- X représente Cl ; et
le ou les monomères (B) de formule (III) sont choisis notamment parmi ceux pour lesquels :
- R⁷ représente H ;
- R⁸ représente -CH₃ ;
- R⁹ représente -CH₃ ou benzyle ; et
- X représente Cl.

Le ou les monomères (C) sont choisis notamment parmi les acides carboxyliques à insaturation éthylénique et leurs sels, comme l'acide acrylique et ses sels, et les monomères sulfonés à insaturation éthylénique et leurs sels, comme l'acide 2-acrylamido-2-méthylpropane-sulfonique et ses sels. Les sels sont ici en particulier les sels de métaux alcalins, tels que les sels de sodium et de potassium.

Le ou les monomères (D) sont choisis notamment parmi les halogénures (en particulier les chlorures) de (méth)acryloyloxyéthyltriméthyl ammonium.

Le ou les monomères (E) sont choisis notamment parmi les (méth)acrylates d'alkyle, tels que l'acrylate d'éthyle et l'acrylate de butyle, et les monomères vinylaromatiques, tels que le styrène.

Les monomères hydrosolubles (F) sont choisis notamment parmi les (méth)acrylates polyéthoxylés, les (méth)acrylates polyéthoxylés ayant des motifs hydrophobes (tels qu'une chaîne alkyle) ou des motifs aryle, et la N-vinylpyrrolidone. On peut citer en particulier les méthacrylates polyéthoxylés ayant 8, 12, 22 et 44 unités oxyde d'éthylène.

Le (co)polymère selon l'invention se présente sous la forme d'une dispersion dans un solvant organique, d'une solutions aqueuse ou d'une poudre, selon son procédé particulier de fabrication.

La présente invention a également pour objet un procédé de fabrication d'un copolymère tel que défini ci-dessus, caractérisé par le fait que l'on conduit une (co)polymérisation radicalaire du ou des monomères tels que définis ci-dessus par polymérisation en émulsion inverse conduisant à une dispersion du (co)polymère hydrosoluble dans un solvant organique, ou par polymérisation en solution aqueuse conduisant à un polymère sous forme de solution aqueuse ou de poudre.

Dans le procédé par polymérisation en émulsion inverse, on émulsionne le ou les monomères dans une phase organique à l'aide d'au moins un agent émulsifiant organosoluble, puis on polymérise en émulsion.

La phase organique est constituée d'un liquide hydrophobe inerte et représente en général de 10 à 49%, de préférence de 20 à 40%, du poids total de l'émulsion. Le liquide hydrophobe inerte peut être choisi dans une large gamme de liquides organiques comprenant les hydrocarbures liquides et les hydrocarbures liquides substitués, contenant de préférence 4 à 8 atomes de carbone ou même plus de 8 atomes de carbone. On peut utiliser par exemple le xylène, le toluène, les huiles minérales, le kérosène, les essences lourdes et, dans certains cas, le pétrole. Les coupes pétrolières et en particulier la coupe isoparaffinique à chaîne ramifiée vendue sous la marque de fabrique "ISOPAR® M" sont particulièrement intéressantes.

Les agents émulsifiants organosolubles appropriés sont ceux qui possèdent un indice HLB (équilibre hydrophile lipophile) compris entre 2 et 10, et de préférence entre 3 et 9. Pour la définition du HLB, on peut se reporter à l'article de W.C. Griffin dans "Journal of Society of Cosmetic Chemist", Volume 1, page 311 (1950). A titre d'exemples, on peut citer les esters d'acides gras de mono-, di- et polyglycérines, comme le monooléate, le dioléate, le monostéarate, le distéarate et le palmitate-stéarate. On peut préparer ces esters par exemple en estérifiant des mono-, di- et polyglycérines, ou des mélanges d'alcools polyhydoxylés tels que l'éthylène glycol, le diéthylène glycol, le dipropopylène glycol, le butanediol-1,4, le butanetriol-1,2,4, la glycérine, le triméthylolpropane, le sorbitol, le néopentylglycol et le pentaérythritol. En outre, on peut citer les esters d'acides gras du sorbitan, comme le monooléate de sorbitan, le dioléate de sorbitan, le trioléate de sorbitan, le monostéarate de sorbitan et le tristéarate de sorbitan.

Les esters d'acide gras de mannityle, comme le monolaurate de mannityle ou le monopalmitate de mannityle, les esters d'acides gras de pentaérythrityle, comme le monomyristate de pentaérythrityle, le monopalmitate de pentaérythrityle, le dipalmitate de pentaérythrityle, les esters d'acides gras du polyéthylèneglycolsorbitan, plus particulièrement les monooléate et trioléate, les esters d'acides gras de glucose, comme le monooléate de glucose et le monostéarate de glucose, le distéarate de triméthylolpropane, les produits de la réaction de l'isopropylamide avec l'acide oléique, les esters d'acides gras de glycérinesorbitan, les alkylamines éthoxylées, le phtalate d'hexadécylsodium et le phtalate de décylsodium peuvent également convenir comme agents émulsifiants.

La température de polymérisation dépend de la cinétique de décomposition de l'amorceur utilisé et est généralement comprise entre 10 et 100°C, de préférence 30 et 90°C.

On opère de préférence en l'absence d'oxygène. On peut ainsi utiliser un flux de gaz inerte, tel que l'azote ou l'argon, pour purger l'installation.

On conduit la polymérisation avantageusement en présence d'au moins un amorceur, utilisé à raison notamment de 0,01 à 2%, de préférence de 0,02 à 0,5%, par rapport au poids total de monomère(s). Le ou les amorceurs sont choisis généralement parmi les peroxydes, les peresters, les composés azoïques et les composés diazoïques appartenant à la famille des esters d'acides azocarboxyliques.

Comme peroxydes, on peut citer le peroxyde de benzoyle, le peroxyde de lauroyle et le peroxyde de succinyle. Comme perester, on peut citer le perpivalate de tert.-butyle. Comme amorceur azoïque, on peut citer parmi l'azo-2,2'-bis-iso-butyronitrile, l'azo-4,4'-bis(cyano-4-pentanoïque) et l'azobis(amidinopropane). Comme amorceurs diazoïques appartenant à la famille des esters d'acides azocarboxyliques, on peut mentionner ceux représentés par la formule (V) : 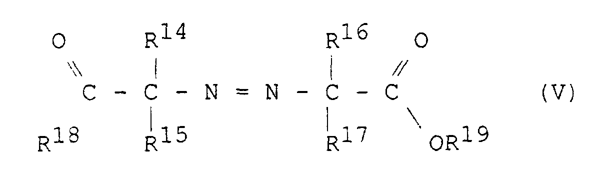 dans laquelle :
- R¹⁴, R¹⁵, R¹⁶ et R¹⁷, identiques ou différents, représentent chacun indépendamment :
   - alkyle linéaire ou ramifié ayant de 1 à 9 atomes de carbone, de préférence de 1 à 4 atomes de carbone, éventuellement substitué par un ou plusieurs substituants choisis parmi hydroxy, alcoxy en C₁ à C₆ et halogène ;
   - cycloalkyle en C₁ à C₆ ;
   - alcoxy en C₁ à C₆ ;
   - hydroxy ;
   - halogène ;
   - aralkyle éventuellement substitué par un ou plusieurs substituants choisis parmi alkyle en C₁ à C₆, alcoxy en C₁ à C₆, hydroxy et halogène,
   au moins une des combinaisons R¹⁴-R¹⁵ et R¹⁶-R¹⁷ pouvant éventuellement former un cycle aliphatique ; et
- R¹⁸ et R¹⁹, identiques ou différents, représentent chacun indépendamment un radical aliphatique linéaire ou ramifié en C₁ à C₁₀, de préférence de C₁ à C₄.
Est particulièrement préféré comme amorceur diazoïque le 2,2'-azobisisobutyrate de diéthyle (composé de formule (V) avec R¹⁴ à R¹⁷ représentant chacun méthyle et R¹⁸ et R¹⁹ représentant éthyle).

L'avantage de ces esters d'acides azocarboxyliques est leur basse température de fusion, généralement inférieure à 27°C.

Dans le procédé par polymérisation en solution aqueuse (appelé aussi procédé gel), on conduit une polymérisation stationnaire dans l'eau, à une concentration en monomère(s) supérieure à 10% en poids, de préférence de 20 à 60% en poids, et en présence d'au moins un amorceur hydrosoluble à raison de 0,01 à 2% en poids, de préférence de 0,02 à 0,5% en poids, par rapport au(x) monomère(s), ladite polymérisation conduisant à un polymère sous forme de gel hydraté qui peut être dilué avec de l'eau pour obtenir une solution aqueuse hydrosoluble de concentration typiquement inférieure à 6%, ou découpé ou précipité et séché pour obtenir une poudre. Le polymère obtenu présente une masse molaire élevée, en particulier de 1 million à 10 millions.

Le ou les amorceurs hydrosolubles sont notamment choisis parmi les peroxydes tels que l'eau oxygénée, les persels, tels que les persulfates, et les composés azoïques, tels que l'acide 4,4'-azobis(cyano-4-pentanoïque) et le chlorhydrate d'azobis-(amidino propane), ces amorceurs pouvant être associés à des amorceurs organosolubles, en particulier les amorceurs diazoïques tels que ceux décrits précédemment pour la polymérisation en émulsion inverse.

Le ou les amorceurs hydrosolubles peuvent aussi être combinés avec des activateurs de polymérisation choisis de préférence parmi les métabisulfites et Fe²⁺, pour amorcer la polymérisation aux basses températures.

On conduit la polymérisation à une température comprise entre 3 et 100°C, de préférence entre 5 et 95°C. Il est préférable d'utiliser un mode de polymérisation adiabatique qui consiste à amorcer la polymérisation à basse température notamment entre 5 et 20°C et de laisser la polymérisation se développer sans chauffer ou refroidir le milieu réactionnel, entraînant de ce fait une augmentation de la température du milieu réactionnel par le biais de la chaleur dégagée par la réaction de polymérisation.

La présente invention a également pour objet l'utilisation d'un (co)polymère tel que défini ci-dessus ou préparé par un procédé tel que défini ci-dessus, quelle que soit la présentation dudit (co)polymère, comme floculant dans l'épuration des eaux résiduaires urbaines et industrielles, dans l'industrie papetière, dans les mines, les carrières, les boues de forage, dans la récupération assistée du pétrole et dans le traitement d'eau potable.

Les Exemples suivants illustrent la présente invention sans toutefois en limiter le portée. Dans ces exemples, les % et parties sont en poids sauf indication contraire, et les abréviations suivantes ont été utilisées :
- DEAB : 2,2'-azobisisobutyrate de diéthyle (amorceur azoïque)
- EDTA : acide éthylène diamine tétra acétique
- ADAMQUAT MC 80 : solution aqueuse à 80% en poids de chlorure d'acryloyloxyéthyl triméthyl ammonium : 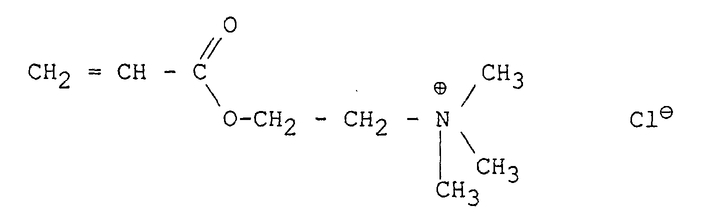
- S-ADAMQUAT 2BZ : composé de formule :

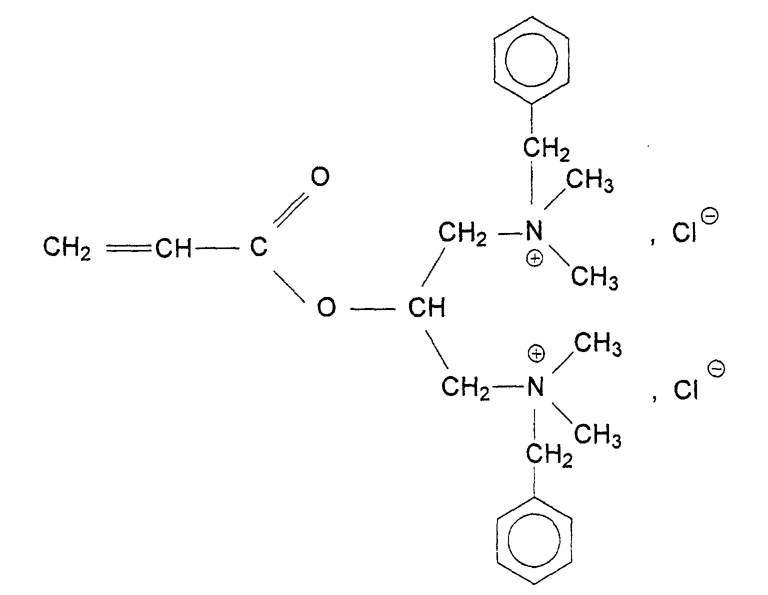

Dans les Exemples 1 et 2, une quantité introduite indiquée en parties correspond à 100 parties de monomères.
- ISOPAR® M : hydrocarbure paraffinique commercialisé par la Société "EXXON" (phase organique).
- SPAN® 80 : monooléate de sorbitan commercialisé par la Société "ICI" (émulsifiant organosoluble).
- TWEEN® 61 : monostéarate de sorbitan polyéthoxyléné à 4 moles d'oxyde d'éthylène commercialisé par la Société "ICI".

### EXEMPLE 1 : EMULSION INVERSE

### (a) Préparation de la phase aqueuse :

Les produits suivants sont successivement introduits dans un bécher sous agitation :
- Eau déminéralisée 165,93 g
- Solution aqueuse à 50% d'acrylamide 296,81 g
- ADAMQUAT MC 80 à 80% dans l'eau 33,17 g
- Solution aqueuse à 75% de S-ADAMQUAT 2BZ 27,61 g
- EDTA (agent complexant) 0,08 g
- Acide adipique 11,86 g
- Solution aqueuse à 50% de NaOH 1,59 g
- NaCℓ 11,86 g

### (b) Préparation de la phase huile :

Les produits suivants sont successivement introduits dans un vase de Wolff de 1 litre :
- ISOPAR® M 207,75 g
- SPAN® 80 17,50 g
- TWEEN® 61 2,07 g

### (c) Préparation de la pré-émulsion :

La phase aqueuse précédemment préparée est versée dans la phase huile. Une homogénéisation des deux phases est réalisée à l'aide d'un mélangeur Ultra-Turrax® pendant 2 minutes.

### (d) Réaction de polymérisation :

La pré-émulsion précédemment obtenue est versée dans un réacteur de polymérisation muni d'une agitation double turbine réglée à 500 tours/minute, d'un réfrigérant et d'un tube plongeant alimenté en azote. La pré-émulsion est alors maintenue 30 minutes sous balayage d'azote et la température est portée à 47°C. Le DEAB (0,15 partie) est alors introduit tout en maintenant la température du milieu réactionnel à 47°C ± 2°C pendant 2h30. On effectue alors un palier à 52,5°C pendant 1 heure et un deuxième palier à 80°C également pendant 1 heure. Le milieu réactionnel est alors refroidi à température ambiante et dépoté en filtrant le mélange sur un filtre de 10 microns.

L'émulsion est caractérisée par :
- un extrait sec de 25% ;
- une viscosité intrinsèque de 12,5 (dl/l) ; et
- un taux de coagulum nul.

### EXEMPLE 2 : EMULSION INVERSE

On procède de la même façon que pour l'Exemple 1, excepté qu'on utilise les quantités suivantes pour préparer la phase aqueuse :
- Eau déminéralisée 165,93 g
- Solution aqueuse à 50% d'acrylamide 306,15 g
- ADAMQUAT MC 80 à 80% dans l'eau 39,87 g
- Solution aqueuse à 75% de S-ADAMQUAT 2BZ 14,24 g
- EDTA 0,08 g
- Acide adipique 11,86 g
- Solution aqueuse à 50% de NaOH 1,59 g
- NaCℓ 11,86 g

L'émulsion obtenue est caractérisée par :
- un extrait sec de 25% ;
- une viscosité intrinsèque de 12,5 (dl/l) ; et
- un taux de coagulum nul.

### EXEMPLE 3 : POLYMÉRISATION ADIABATIQUE EN SOLUTION SELON LE PROCÉDÉ GEL

Les solutions de réactifs suivantes sont préparées :
- solution de persulfate d'ammonium (amorceur) on dilue 0,033 g de persulfate d'ammonium dans 25 ml d'eau déminéralisée ;
- solution de métabisulfite de sodium (activateur) on dilue 0,033 g de métabisulfite de sodium dans 25 ml d'eau déminéralisée ;
- solution de Fe²⁺ (activateur) on dilue 0,12 g de sel de Mohr dans 100 ml d'eau déminéralisée.

Dans un bécher inox de 1 litre refroidi par bain de glace, on introduit dans l'ordre et sous agitation :
- 108,1 g d'eau déminéralisée ;
- 160 g d'une solution aqueuse à 50% d'acrylamide ;
- 17,87 g d'ADAMQUAT MC 80 à 80% dans l'eau ; et
- 14,88 g d'une solution aqueuse à 75% de S-ADAMQUAT 2BZ.

On dégaze la solution par un barbotage d'azote, puis on place un papier d'aluminium sur le bécher. La température de la solution est ramenée vers 10°C et la solution de persulfate d'ammonium préparée ci-dessus est ajoutée. On ajoute ensuite du DEAB (post-amorceur) pesé précisément (environ 0,1 g).

Dans la solution de métabisulfite de sodium préparée ci-dessus, on introduit précisément 1,2 g de la solution de sel de Fe²⁺ préparée ci-dessus.

Dans un Dewar® de 1 litre, on place une pochette de polyéthylène et on dégaze quelques minutes à l'azote.

Lorsque le mélange réactionnel atteint 10°C, on le transvase dans la pochette de polyéthylène dans le Dewar®, et on laisse le dégazage d'azote et la sonde de température (munie d'un guide en verre). On verse la solution de métabisulfite de sodium précédemment préparée et on agite fortement avec le guide pendant 5 secondes pour homogénéiser avant que le gel ne prenne. On retire le bullage d'azote et on suit l'exothermie.

On laisse la réaction se poursuivre pendant au moins 5 heures.

Le gel récupéré peut être dilué avec de l'eau pour obtenir une solution aqueuse de polymère hydrosoluble de faible concentration (2 à 5%) ou découpé en petits morceaux et séché pour obtenir de la poudre, ou précipité dans l'acétone et découpé en petits morceaux avant d'être séché pour obtenir de la poudre.

Le polymère présente une viscosité intrinsèque de 2,6 (dl/l).

### EXEMPLE 4 : POLYMÉRISATION ADIABATIQUE EN SOLUTION SELON LE PROCÉDÉ GEL

On procède de la même façon que pour l'Exemple 3, excepté qu'on utilise :
- 20,84 g d'ADAMQUAT MC 80 à 80% dans l'eau ; et
- 7,45 g d'une solution aqueuse à 75% de S-ADAMQUAT 2BZ.

Le polymère présente une viscosité intrinsèque de 2,6 (dl/l).

## Revendications

1. Co)polymère cationique hydrosoluble, **caractérisé par le fait qu'**il est obtenu à partir d'une composition de monomères comprenant, pour 100 parties en moles :
(A) de 0 à 95 parties en moles d'au moins un monomère hydrosoluble de formule (I) : 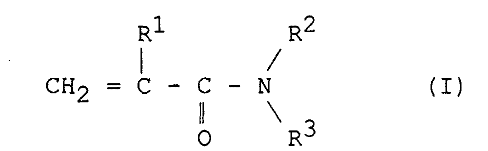 dans laquelle :
- R¹ représente H ou -CH₃ ; et
- R² et R³, identiques ou différents, représentent chacun indépendamment H, alkyle en C₁-C₅ qui comporte éventuellement un ou plusieurs groupes OH, ou (alcoxy en C₁-C₅)-alkyle en C₁-C₅ ;
(B) 0,20 à 100 parties en moles d'au moins un monomère hydrosoluble cationique choisi parmi ceux des formules (II) et (III) suivantes : 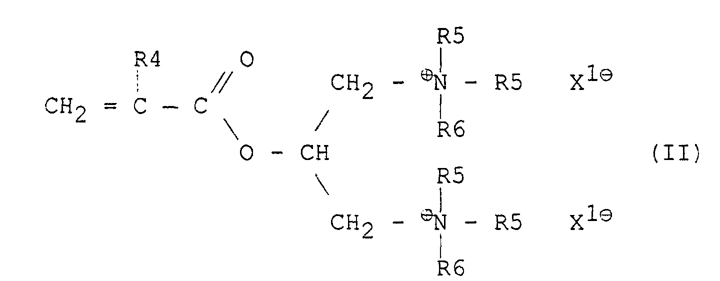 dans laquelle :
- R⁴ représente H ou -CH₃ ;
- R⁵ et R⁶, identiques ou différents, représentent chacun indépendamment H, alkyle en C₁-C₁₈, benzyle ou hydroxyéthyle ; et
- X^{1⊖} représente un anion monovalent ; 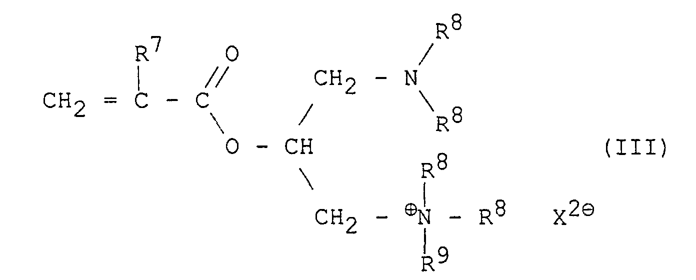
dans laquelle :
- R⁷ représente H ou un -CH₃ ;
- R⁸ et R⁹, identiques ou différents, représentent chacun indépendamment hydrogène, alkyle en C₁-C₁₈, benzyle ou hydroxyéthyle ; et
- X^{2⊖} représente un anion monovalent ;
(C) 0 à 60 parties en moles d'au moins un monomère hydrosoluble potentiellement anionique par variation du pH ;
(D) 0 à 90 parties en moles d'au moins un monomère hydrosoluble cationique ayant un seul groupe amino quaternaire, de formule (IV) : : 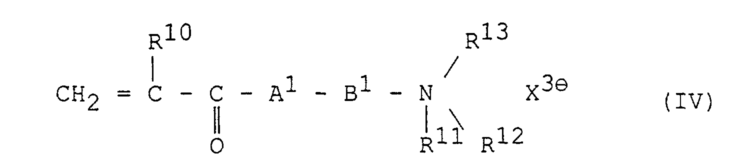 dans laquelle :
- R¹⁰ représente H ou -CH₃ ;
- A¹ représente -O- ou -NH- ;
- B¹ représente CH₂-CH₂- , -CH₂-CH₂CH₂- ou -CH₂-CHOH-CH₂- ;
- R¹¹ et R¹², identiques ou différents, représentent chacun indépendamment -CH₃ ou un groupe alkyle en C₂-C₁₆ ;
- R¹³ représente hydrogène, -CH₃ ou un groupe alkyle en C₂-C₁₆ ; et
- X^{3⊖} est un anion monovalent ;
(E) 0 à 10 parties en moles d'au moins un monomère hydrophobe ; et
(F) 0 à 30 parties en moles d'au moins un monomère hydrosoluble autre que les monomères (A), (B), (C) et (D) .

2. Copolymère cationique hydrosoluble selon la revendication 1, **caractérisé par le fait que** le ou les composés (A) de formule (I) sont choisis parmi l'acrylamide, le méthacrylamide, le N-isopropyl acrylamide, le N-éthoxypropyl acrylamide, le N,N-diméthylacrylamide, le N-(2-hydroxypropyl)acrylamide et le N-(2-hydroxypropyl)-méthacrylamide.

3. Copolymère cationique hydrosoluble selon l'une des revendications 1 et 2, **caractérisé par le fait que** le ou les monomères (B) de formule (II) sont choisis parmi ceux pour lesquels :
- R⁴ représente H ;
- R⁵ représente -CH₃ ;
- R⁶ représente -CH₃ ou benzyle ; et
- X représente Cl ; et le ou les monomères (B) de formule (III) sont choisis parmi ceux pour lesquels :
- R⁷ représente H ;
- R⁸ représente -CH₃ ;
- R⁹ représente -CH₃ ou benzyle ; et
- X représente Cl.

4. Copolymère cationique hydrosoluble selon l'une des revendications 1 à 3, **caractérisé par le fait que** le ou les monomères (C) sont choisis parmi les acides carboxyliques à insaturation éthylénique et leurs sels, et les monomères sulfonés à insaturation éthylénique et leurs sels.

5. Copolymère cationique hydrosoluble selon la revendication 4, **caractérisé par le fait que** le ou les monomères (C) sont choisis parmi l'acide acrylique et ses sels, et l'acide 2-acrylamido-2-méthylpropane-sulfonique et ses sels.

6. Copolymère cationique hydrosoluble selon l'une des revendications 1 à 5, **caractérisé par le fait que** le ou les monomères (D) sont choisis parmi les halogénures de (méth)acryloyloxyéthyltriméthyl ammonium.

7. Copolymère cationique hydrosoluble selon l'une des revendications 1 à 6, **caractérisé par le fait que** le ou les monomères (E) sont choisis parmi les (méth)acrylates d'alkyle, tels que l'acrylate d'éthyle et l'acrylate de butyle, et les monomères vinylaromatiques, tels que le styrène.

8. Copolymère cationique hydrosoluble selon l'une des revendications 1 à 7, **caractérisé par le fait que** les monomères hydrosolubles (F) sont choisis parmi les (méth)acrylates polyéthoxylés, les (méth)acrylates polyéthoxylés ayant des motifs hydrophobes ou des motifs aryle, et la N-vinylpyrrolidone.

9. Copolymère cationique hydrosoluble selon l'une des revendications 1 à 8, **caractérisé par le fait qu'**il se présente sous la forme d'une dispersion dans un solvant organique, d'une solution aqueuse ou d'une poudre.

10. Procédé de fabrication d'un copolymère tel que défini à l'une des revendications 1 à 9, **caractérisé par le fait que** l'on conduit une (co)polymérisation radicalaire du ou des monomères tels que définis à l'une des revendications 1 à 9 par polymérisation en émulsion inverse conduisant à une dispersion du (co)polymère hydrosoluble dans un solvant organique, ou par polymérisation en solution aqueuse conduisant à un polymère sous forme de solution aqueuse ou de poudre.

11. Procédé selon la revendication 10, par polymérisation en émulsion inverse, **caractérisé par le fait que** l'on émulsionne le ou les monomères dans une phase organique à l'aide d'au moins un agent émulsifiant organosoluble, puis que l'on polymérise en émulsion.

12. Procédé selon la revendication 11, **caractérisé par le fait que** la phase organique représente de 10 à 49% du poids total de l'émulsion.

13. Procédé selon l'une des revendications 11 ou 12, **caractérisé par le fait que** la phase organique est choisie parmi le xylène, le toluène, les huiles minérales, le kérosène, les essences lourdes, le pétrole et les coupes pétrolières.

14. Procédé selon l'une des revendications 11 à 13, **caractérisé par le fait que** le ou les agents émulsifiants organosolubles sont choisis parmi ceux ayant un indice HLB compris entre 2 et 10, de préférence entre 3 et 9.

15. Procédé selon l'une des revendications 11 à 14, **caractérisé par le fait que** le ou les agents émulsifiants organosolubles sont choisis parmi les esters d'acides gras de mono-, di- et polyglycérides ; les esters d'acides gras du sorbitanne ; les esters d'acides gras de mannityle ; les esters d'acide gras de pentaérythirtyle ; les esters d'acides gras du polyéthylèneglycolsorbitan ; les esters d'acides gras de glucose ; le distéarate de triméthylolpropane ; les produits de la réaction de l'isopropylamide avec l'acide oléique ; les esters d'acides gras de glycérinesorbitan ; les alkylamines éhoxylées ; le phtalate d'hexadécylsodium ; et le phtalate de décylsodium.

16. Procédé selon l'une des revendications 11 à 15, **caractérisé par le fait que** l'on conduit la polymérisation à une température comprise entre 10 et 100°C, de préférence entre 30 et 90°C.

17. Procédé selon l'une des revendications 11 à 16, **caractérisé par le fait que** l'on conduit la polymérisation en l'absence d'oxygène.

18. Procédé selon l'une des revendications 11 à 17, **caractérisé par le fait que** l'on conduit la polymérisation en présence d'au moins un amorceur, représentant de 0,01% à 2% par rapport au poids total de monomère(s), de préférence de 0,02 à 0,5%.

19. Procédé selon l'une des revendications 11 à 18, **caractérisé par le fait que** le ou les amorceurs sont choisis parmi les peroxydes, les composés azoïques et les composés diazoïques appartenant à la famille des esters d'acides azocarboxyliques.

20. Procédé selon la revendication 10 par polymérisation en solution aqueuse, **caractérisé par le fait que** l'on conduit une polymérisation stationnaire dans l'eau, à une concentration en monomère(s) supérieure à 10% en poids et en présence d'au moins un amorceur hydrosoluble à raison de 0,01 à 2% en poids par rapport au(x) monomère(s), ladite polymérisation conduisant à un polymère sous forme de gel hydraté qui peut être dilué avec de l'eau pour obtenir une solution aqueuse hydrosoluble de concentration typiquement inférieure à 6%, ou découpé ou précipité et séché pour obtenir une poudre.

21. Procédé selon la revendication 20, **caractérisé par le fait que** l'on conduit la polymérisation à une concentration en monomère(s) de 20 à 60% en poids.

22. Procédé selon l'une des revendications 20 et 21, **caractérisé par le fait que** le ou les amorceurs hydrosolubles sont choisis parmi les peroxydes, les persels et les composés azoïques, lesquels peuvent être associés à des amorceurs organosolubles.

23. Procédé selon l'une des revendications 20 à 32, **caractérisé par le fait que** le ou les amorceurs hydrosolubles sont combinés avec des activateurs de polymérisation choisis de préférence parmi les métabisulfites et Fe²⁺.

24. Procédé selon l'une des revendications 20 à 23, **caractérisé par le fait que** l'on conduit la polymérisation à une température comprise entre 3 et 100°C, de préférence entre 5 et 95°C.

25. Procédé selon l'une des revendications 20 à 24, **caractérisé par le fait que** l'on amorce la polymérisation à basse température, de préférence entre 5 et 20°C, puis qu'on la laisse se développer à la seule chaleur dégagée par la réaction de polymérisation.

26. Utilisation d'un (co)polymère tel que défini à l'une des revendications 1 à 19 ou préparé par un procédé tel que défini à l'une des revendications 20 à 25 comme floculant dans l'épuration des eaux résiduaires urbaines et industrielles, dans l'industrie papetière, dans les mines, les carrières, les boues de forage, dans la récupération assistée du pétrole et dans le traitement d'eau potable.
